# FASCICULE DE BREVET EUROPEEN

(11) **EP 3 225 536 B1**
(45) Date de publication et mention de la délivrance du brevet: **25.11.2020**
(21) Numéro de dépôt: 16305376.2
(22) Date de dépôt: 31.03.2016
(51) Int. Cl.: B63J 3/02, B63H 21/20, F01K 15/04, F01K 23/06, B60L 1/00, B60L 3/00, B63H 23/24, B63H 23/12, B63H 21/17, H02H 9/00, H02K 47/00

(54) **SYSTÈME DE DISTRIBUTION D'ÉNERGIE ÉLECTRIQUE, PROCÉDÉ D'ALIMENTATION D'UNE CHARGE CORRESPONDANT, SYSTÈME ET PROCÉDÉ DE PROPULSION POUR NAVIRE**
SYSTEM ZUR VERTEILUNG VON ELEKTRISCHER ENERGIE, VERFAHREN ZUR EINSPEISUNG EINER ENTSPRECHENDEN LADUNG, ANTRIEBSSYSTEM UND -VERFAHREN EINES SCHIFFS
ELECTRICAL POWER DISTRIBUTION SYSTEM, METHOD FOR SUPPLYING A CORRESPONDING LOAD, PROPULSION SYSTEM AND METHOD FOR A SHIP

(43) Date de publication de la demande: 04.10.2017
(73) Titulaire: GE Energy Power Conversion Technology Ltd, Rugby Warwickshire CV21 1BU (GB)
(72) Inventeur: LECLERE, Loïc, 90000 BELFORT (FR); FRIZON, Jean-Marie, 90000 BELFORT (FR)
(74) Mandataire: Casalonga

(56) Documents cités:
- EP-A1- 1 641 098
- EP-A1- 2 371 703
- DE-A1-102006 040 857
- GB-A- 2 442 770
- JP-A- H0 446 892

## Description

L'invention concerne, de manière générale, les systèmes de distribution d'énergie électrique, et en particulier les systèmes de distribution d'énergie électrique embarqués à bord de navires pour l'alimentation de charges électriques embarquées, tels que le système de propulsion, en ce qui concerne les navires à propulsion électrique.

L'invention concerne également un système de propulsion pour navire doté d'un tel système de distribution d'énergie électrique.

Les systèmes de propulsion pour navire peuvent être de diverses natures. Dans le but de réduire la consommation et les émissions polluantes vers l'atmosphère, il a été proposé d'utiliser un moteur thermique principal qui entraîne une ligne d'arbres portant une hélice ainsi qu'une turbine à vapeur qui valorise les gaz d'échappement du moteur principal pour entraîner la ligne d'arbres, conjointement avec le moteur thermique.

On pourra à cet égard se référer au document GB 1, 159, 090 qui décrit un tel agencement.

On pourra également se référer au document EP-B-2 057 068 qui décrit un autre type de système de propulsion comprenant un moteur thermique principal, par exemple un moteur diesel à deux temps, dédié à l'entraînement de la ligne d'arbre et comprenant un moteur électrique auxiliaire couplé à la ligne d'arbre et alimenté à partir d'un réseau de distribution.

Le réseau de distribution est lui-même alimenté à partir de générateurs entraînés par des moteurs thermiques auxiliaires.

La pression des gaz d'échappement du moteur thermique principal est utilisée pour entraîner une turbine de puissance et la chaleur des gaz d'échappement est utilisée dans un échangeur de chaleur pour entraîner une turbine à vapeur. Ces deux turbines sont associées à un générateur qui alimente le réseau de distribution.

L'énergie électrique disponible sur le réseau de bord peut être utilisée pour alimenter diverses charges embarquées à bord du navire ou pour sa propulsion.

Les systèmes récupérant l'énergie thermique générée lors du fonctionnement d'un moteur thermique, en l'espèce un moteur thermique principal entraînant la ligne d'arbres ou des moteurs thermiques auxiliaires, pour produire de l'électricité sont désignés par le terme WHRS (pour « Waste Heat Recovery System », en langue anglaise).

Dans le système décrit dans le document EP-B-2 057 068, le débit de vapeur délivrée à la turbine à vapeur est réglé par une vanne. Un dispositif de commande contrôle l'ouverture de la vanne de sorte que la pression de vapeur soit maintenue à l'intérieur d'une plage de pressions prédéterminée.

Plus particulièrement, la pression de la vapeur admise dans la turbine à vapeur est contrôlée pour agir sur la puissance consommée ou produite.

Le système de propulsion propose un fonctionnement réversible.

Selon un premier mode de fonctionnement, le moteur auxiliaire électrique attelé contribue à l'entraînement de l'arbre d'hélice, en prélevant de l'énergie sur le réseau de distribution par l'intermédiaire d'un convertisseur. Ce mode de fonctionnement est généralement désigné par le terme de PTI (pour « Power Take IN »).

Le moteur auxiliaire peut aussi fonctionner en mode générateur et délivrer de l'énergie électrique au réseau de distribution par l'intermédiaire d'un convertisseur. Ce mode de fonctionnement est généralement désigné par le terme de PTO (pour « Power Take Off »).

Ainsi, si la puissance fournie par la turbine à vapeur augmente jusqu'à atteindre une valeur haute de sorte que la turbine à vapeur est davantage sollicitée, le moteur électrique auxiliaire couplé à la ligne d'arbres fonctionne en mode moteur de manière à augmenter la quantité d'énergie consommée.

Au contraire, si la pression dans la turbine à vapeur diminue, le moteur auxiliaire attelé fonctionne en mode générateur par l'intermédiaire d'un convertisseur pour réinjecter de la puissance nécessaire à l'alimentation du réseau de distribution.

Une autre technique de commande du système WHRS consiste à utiliser un dispositif de commande qui élabore un signal de commande de la vanne de la turbine à vapeur en fonction de la vitesse et de la puissance.

Dans le système décrit dans le document DE 10 2006 040857, le convertisseur de fréquence est piloté par des moyens de contrôle de manière à réinjecter l'énergie disponible dans le moteur/générateur qui est sur la ligne d'arbre de propulsion, et cela si la pression de la vapeur dans le circuit WHRS dépasse un seuil maximum.

Il a été toutefois constaté que les procédés de commande des systèmes WHRS selon l'état de la technique souffraient d'un certain nombre d'inconvénients, notamment en raison du fait que le rendement du système, notamment en ce qui concerne la valeur maximale d'énergie disponible, est relativement faible. Il a en outre été constaté des problèmes de stabilité pendant les phases transitoires lorsque les générateurs auxiliaires fonctionnent en parallèle ou lorsque le système WHRS est commuté du mode PTI vers le mode PTO.

Au vu de ce qui précède, le but de l'invention est de pallier les inconvénients liés à l'état de la technique et, en particulier, d'augmenter l'énergie maximale délivrée par le système WHRS et d'améliorer la fiabilité du fonctionnement du système ainsi que les phases transitoires.

L'invention a donc pour objet, selon un premier aspect, un système de distribution d'énergie électrique, comprenant un ensemble de générateurs d'énergie électrique entraînés chacun par un moteur thermique et alimentant un réseau de distribution, des moyens pour récupérer l'énergie thermique générée lors du fonctionnement des moteurs thermiques et pour vaporiser un fluide de travail, une turbine à vapeur entraînée par le fluide de travail et associée à un générateur raccordé au réseau de distribution pour la transformation de l'énergie thermique récupérée en énergie électrique, le débit du fluide de travail vaporisé étant réglé à une valeur maximale, et des moyens pour contrôler la fréquence du réseau de distribution comprenant au moins un convertisseur de fréquence disposé entre le réseau de distribution et une charge électrique.

Les moyens de contrôle comprennent des moyens de régulation pour réguler la fréquence du réseau entre des valeurs minimale et maximale de fréquence.

Les moyens de régulation comprennent en outre une boucle à verrouillage de phase associée à un correcteur de type proportionnel intégral et un comparateur recevant une valeur de référence de puissance et la sortie du correcteur pour piloter le convertisseur de fréquence.

Avantageusement, le ou chaque convertisseur de fréquence est un convertisseur bidirectionnel apte à assurer un transfert de puissance bidirectionnel.

Dans un mode de réalisation, chaque convertisseur comprend un étage d'entrée de filtrage, un circuit redresseur actif, un circuit de lissage et un circuit onduleur.

En outre, chaque convertisseur peut comporter une inductance de filtrage de sortie.

L'invention a également pour objet selon un deuxième aspect, un procédé d'alimentation d'une charge au moyen d'un système de distribution d'énergie électrique comprenant un ensemble de générateurs d'énergie électrique entraînés chacun par un moteur thermique et alimentant un réseau de distribution, des moyens pour récupérer l'énergie thermique générée lors du fonctionnement des moteurs thermiques et pour vaporiser un fluide de travail, une turbine à vapeur entraînée par le fluide de travail et associée à un générateur raccordé au réseau de distribution pour la transformation de l'énergie thermique récupérée en énergie électrique, le débit du fluide de travail vaporisé étant réglé à une valeur maximale, et des moyens pour contrôler la fréquence du réseau de distribution comprenant au moins un convertisseur de fréquence disposé entre le réseau de distribution et une charge électrique, caractérisé en ce que l'on régule la fréquence du réseau entre des valeurs minimales et maximales de fréquence au moyen d'au moins une boucle à verrouillage de phase associée à un correcteur de type Proportionnel Intégral et un comparateur recevant une valeur de référence de puissance et la sortie du correcteur pour piloter le convertisseur de fréquence.

De préférence, le débit du fluide de travail vaporisé est réglé en ouvrant au maximum une vanne de commande de débit de fluide de travail vaporisé.

L'invention a enfin pour objet un système de propulsion pour navire, comprenant :
- un moteur thermique principal entraînant une ligne d'arbres ;
- un moteur électrique auxiliaire couplé à la ligne d'arbres et alimenté à partir d'un réseau de distribution d'énergie électrique, ledit réseau de distribution étant alimenté à partir de moteurs thermiques auxiliaires associés à des générateurs d'énergie électrique ;
- des moyens pour récupérer l'énergie thermique générée lors du fonctionnement du système de propulsion et pour vaporiser un fluide de travail ;
- une turbine à vapeur entraînée par le fluide de travail et associée à un générateur raccordé au réseau de distribution pour la transformation de l'énergie thermique récupérée en énergie électrique, le débit du fluide de travail vaporisé étant réglé à une valeur maximale et
- des moyens pour contrôler la fréquence du réseau de distribution comprenant au moins un convertisseur de fréquence disposé entre le réseau de distribution et le moteur électrique auxiliaire,
caractérisé en ce que les moyens de contrôle comprennent des moyens de régulation pour réguler la fréquence du réseau entre des valeurs minimales et maximales de fréquence, les moyens de régulation comprenant au moins une boucle à verrouillage de phase associée à un correcteur de type Proportionnel Intégral et un comparateur recevant une valeur de référence de puissance et la sortie du correcteur pour piloter le convertisseur de fréquence.

Dans un mode de réalisation, le système de propulsion comprend en outre un ensemble de générateurs d'énergie électrique entraînés chacun par un moteur thermique et alimentant le réseau de distribution.

On pourra également prévoir que le système de propulsion comporte en outre au moins un propulseur d'étrave comprenant un moteur électrique apte à être alimenté à partir du réseau de distribution d'énergie électrique par l'intermédiaire du convertisseur de fréquence, ledit réseau étant alimenté à partir des moteurs thermiques lorsque les propulseurs d'étrave sont alimentés à partir dudit réseau.

L'invention a encore pour objet, selon un troisième aspect, un procédé de propulsion d'un navire au moyen d'un système de propulsion comprenant un moteur thermique principal entraînant une ligne d'arbres, un moteur électrique auxiliaire couplé à la ligne d'arbres et alimenté à partir d'un réseau de distribution d'énergie électrique, ledit réseau de distribution étant alimenté à partir de moteurs thermiques auxiliaires associés à des générateurs d'énergie électrique, des moyens pour récupérer l'énergie thermique générée lors du fonctionnement du système de propulsion et pour vaporiser un fluide de travail, une turbine à vapeur entraînée par le fluide de travail et associée à un générateur raccordé au réseau de distribution pour la transformation de l'énergie thermique récupérée en énergie électrique, le débit du fluide de travail vaporisé étant réglé à une valeur maximale, et des moyens pour contrôler la fréquence du réseau de distribution comprenant au moins un convertisseur de fréquence disposé entre le réseau de distribution et le moteur électrique auxiliaire, dans lequel on régule la fréquence du réseau entre des valeurs minimales et maximales de fréquence au moyen d'au moins une boucle à verrouillage de phase associée à un correcteur de type Proportionnel Intégral et un comparateur recevant une valeur de référence de puissance et la sortie du correcteur pour piloter le convertisseur de fréquence.

Avantageusement, selon ce procédé de propulsion, le réseau de distribution est alimenté à partir d'un ensemble de générateurs d'énergie électrique entraînés chacun par un moteur thermique.

Dans un mode de mise en œuvre, on alimente au moins un propulseur d'étrave comprenant un moteur électrique à partir du réseau de distribution d'énergie électrique par l'intermédiaire du convertisseur de fréquence, ledit réseau étant alimenté à partir des moteurs thermiques lorsque les propulseurs d'étrave sont alimentés à partir dudit réseau.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre l'architecture générale d'un système de propulsion pour navire comprenant un système de distribution d'énergie électrique conforme à l'invention ; et
- les figures 2, 3 et 4 illustrent diverses variantes d'un mode de réalisation d'un système de propulsion selon l'invention.

Ce système de propulsion comporte en premier lieu un moteur thermique 1 qui assure l'entraînement d'un arbre moteur 2 doté d'une hélice 3 et qui est équipé d'un moteur électrique auxiliaire 4 de type SGM (pour « Shaft Generator Motor ») lequel est alimenté à partir d'un réseau de distribution 5 de type AC à fréquence fixe.

Le réseau 5 est alimenté à partir d'un ensemble de générateurs G, ici au nombre de quatre, entraînés chacun par des moteurs thermiques auxiliaires, tels que 6, en l'espèce des moteurs diesel à deux temps.

Outre le réseau de distribution 5 et les moteurs thermiques auxiliaires 6 associés aux générateurs, le système de distribution d'énergie électrique est doté de moyens de récupération d'énergie thermique WHRS comprenant un échangeur de chaleur 7 recevant les gaz d'échappement des moteurs auxiliaires 6 pour vaporiser un fluide de travail, en l'espèce de l'eau, et une turbine à vapeur 8 recevant la vapeur issue de l'échangeur en passant par une vanne de réglage 9 pilotée par un dispositif de commande 10.

Le dispositif de commande agit sur la vanne 9 de manière à la commander en position totalement ouverte dès que la pression de la vapeur en amont de la turbine à vapeur dépasse une valeur minimale Pmin. Le dispositif de commande comporte ainsi un organe 10a de mesure de la pression en amont de la turbine à vapeur 8 et un comparateur 10b qui assure la comparaison de la valeur de pression mesurée avec la valeur minimale pour piloter la vanne 9.

Comme on le voit sur la figure, le moteur électrique auxiliaire 4 est alimenté à partir du réseau de distribution 5 au moyen d'un convertisseur de fréquence 11.

Le convertisseur 11 est un convertisseur réversible et constitue un convertisseur fréquence fixe - fréquence variable pour convertir la tension alternative disponible sur le réseau 5 à fréquence fixe en une tension à fréquence variable pour l'alimentation du moteur auxiliaire 4.

Du côté du réseau de distribution, il comporte un étage d'entrée de filtrage 12, puis un circuit redresseur actif 13, un circuit de lissage 14, un circuit onduleur 15 et une inductance de filtrage L.

Le réseau de distribution 5 comporte essentiellement un bus principal alimenté à partir des moteurs auxiliaires et de la turbine à gaz associés aux générateurs G.

Il comporte également un bus secondaire 5a alimenté à partir du bus principal par l'intermédiaire de transformateurs de distribution 16.

On voit par ailleurs que le système comporte un certain nombre de disjoncteurs 17, 18 et 19 susceptibles d'isoler le réseau de distribution 5 des générateurs G, du convertisseur de fréquence 11 et des transformateurs de distribution.

Des disjoncteurs additionnels, tels que 20, permettent d'isoler des portions du bus d'alimentation principal 5 et du bus d'alimentation secondaire 5a.

Enfin, le système de distribution est complété par un étage de contrôle de la fréquence du réseau de distribution.

Cet étage comporte en premier lieu un transformateur 21 de mesure de la tension disponible sur le réseau 5 ainsi qu'une boucle à verrouillage de phase 22 destinée à convertir la tension mesurée en fréquence.

Un comparateur 23 assure une comparaison de la fréquence du réseau de distribution avec une fréquence de référence F_{REF}. Le comparateur 23 est associé, en sortie, à une fonction hystérésis 24, qui lorsqu'elle est active reproduit l'entrée en sortie lorsque la différence entre la fréquence mesurée et la fréquence de référence est au-delà de seuils ΔFmin et ΔFmax. Lorsque la différence est inférieure à ces seuils la sortie de la fonction hystérésis est nulle.

La sortie de la fonction hystérésis est fournie à un correcteur 25 de type Proportionnel Intégral, afin de maintenir la fréquence à l'intérieure de la bande d'hystérésis.

Par ailleurs, un comparateur 27 reçoit une valeur de référence de puissance P_{ref} et la sortie du correcteur 25 pour piloter le convertisseur de fréquence.

On notera enfin que le réseau de distribution est en outre destiné à alimenter diverses charges électriques embarquées à bord du navire.

En effet, le système de propulsion est complété par des moteurs complémentaires, ici des moteurs d'étrave 28 entraînant un arbre portant une hélice et alimentés à partir du réseau 5 par l'intermédiaire d'autotransformateurs 29.

Le système de distribution qui vient d'être décrit fonctionne de la façon suivante.

En premier lieu, lors du fonctionnement des moteurs auxiliaires 6, lorsque la pression de la vapeur admise en entrée de la turbine à vapeur 8 augmente, ce qui provoque une accélération de la turbine à vapeur et une augmentation consécutive de la fréquence du réseau de distribution 5, le moteur SGM est commandé pour augmenter sa consommation de puissance active, si il est en mode moteur, ou pour diminuer sa production de puissance active, si il fonctionne en mode générateur.

En fonction de la consommation du moteur auxiliaire 4 ou si de l'énergie délivrée par la turbine à vapeur est disponible en excès, le convertisseur de fréquence 11 est piloté de manière à réinjecter l'énergie disponible sur la ligne d'arbres au moyen du moteur auxiliaire électrique 4.

Si la pression de la vapeur disponible en entrée de la turbine à vapeur baisse, le moteur SGM est commandé pour augmenter sa consommation de puissance active, s'il est en mode moteur, ou pour diminuer sa production de puissance active, s'il fonctionne en mode générateur, afin de réduire la puissance générée par la turbine à vapeur. Le caractère réversible du convertisseur de fréquence 11 lui permet de passer du mode générateur au mode moteur ou inversement.

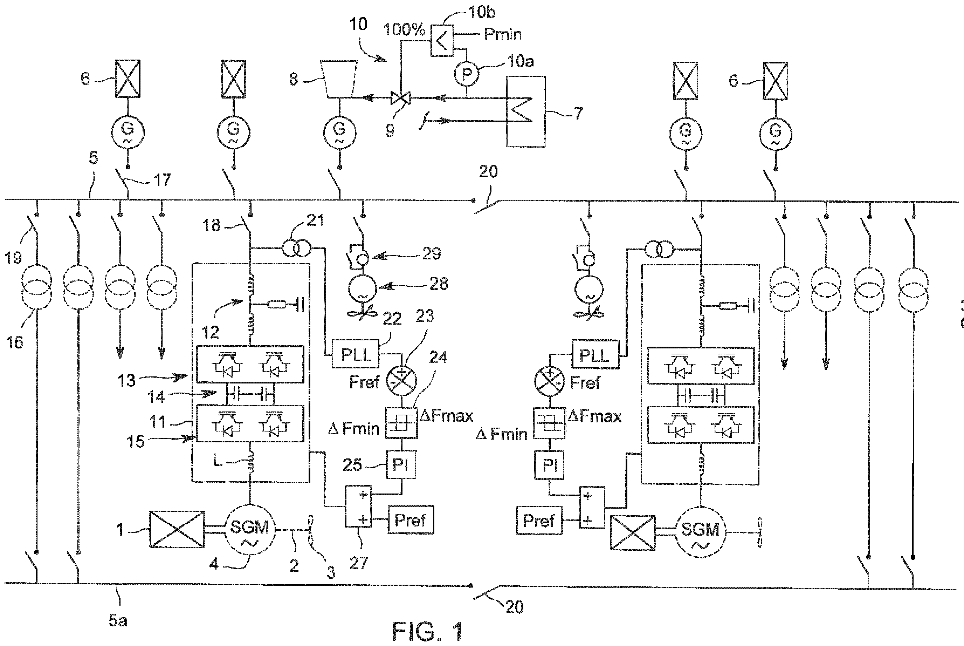

La pression disponible en entrée de la turbine à vapeur est toutefois contrôlée et comparée avec une valeur limite Pmin (figure 1). Dès que la pression dépasse cette valeur limite, la vanne 9 est commandée en position totalement ouverte et l'on procède à la régulation de la fréquence de la tension alternative à fréquence fixe du réseau de distribution 5 en agissant sur le niveau de puissance fournie par le moteur SGM au travers du convertisseur de fréquence.

On notera enfin que l'invention n'est pas limitée au mode de réalisation décrit.

En effet, dans le mode de réalisation décrit en référence à la figure 1, le système de propulsion comporte des propulseurs d'étrave comprenant chacun un moteur électrique d'étrave 28 entraînant un arbre équipé d'une hélice et alimenté à partir du réseau de distribution 5 par l'intermédiaire d'autotransformateurs 29.

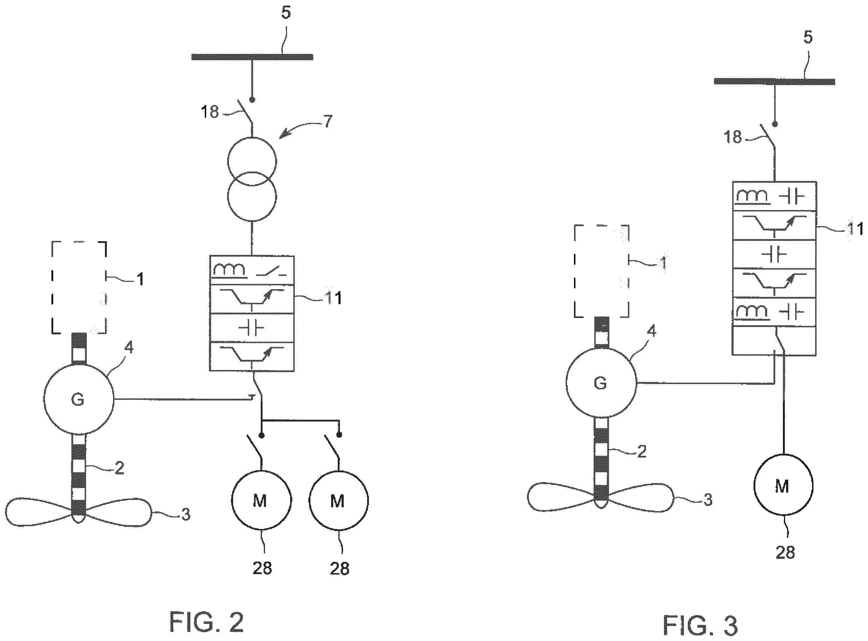

Comme visible sur les figures 2, 3 et 4, sur lesquelles on reconnaît le moteur thermique principal 1 équipé du moteur électrique auxiliaire 4 qui entraînent conjointement l'arbre moteur 2 doté de l'hélice 3, et le convertisseur de fréquence 11 raccordé au réseau de distribution 5 par l'intermédiaire d'un disjoncteur 18 et d'un transformateur T, il est également possible, en variante, d'alimenter les moteurs d'étrave 28 à partir du convertisseur 11.

Les propulseurs d'étrave peuvent ainsi être alimentés à partir du convertisseur de fréquence lorsque le navire est en manœuvre, c'est-à-dire lorsque le navire est à faible vitesse et que le réseau de distribution 5 est alimenté par les moteurs auxiliaires 6 associés aux générateurs respectifs G.

Dans le mode de réalisation de la figure 2, plusieurs moteurs d'étrave, ici au nombre de deux, peuvent être alimentés à partir d'un même convertisseur de fréquence.

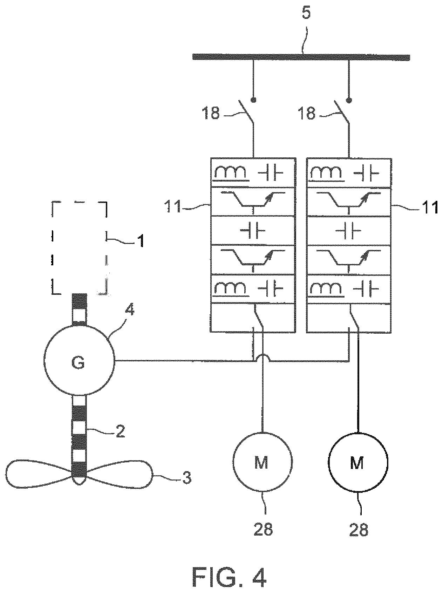

Dans le mode de réalisation des figures 3 et 4, les moteurs d'étrave peuvent être alimentés à partir de plusieurs convertisseurs de fréquence 11 raccordés en parallèle.

## Revendications

1. Système de distribution d'énergie électrique, comprenant un ensemble de générateurs d'énergie électrique (G) entraînés chacun par un moteur thermique (6) et alimentant un réseau de distribution (5) ;
des moyens (7) pour récupérer l'énergie thermique générée lors du fonctionnement des moteurs thermiques et pour vaporiser un fluide de travail ;
une turbine à vapeur (8) entraînée par le fluide de travail et associée à un générateur raccordé au réseau de distribution pour la transformation de l'énergie thermique récupérée en énergie électrique, le débit du fluide de travail vaporisé étant réglé à une valeur maximale, et
des moyens pour contrôler la fréquence du réseau de distribution (5) comprenant au moins un convertisseur de fréquence (11) disposé entre le réseau de distribution et une charge électrique,
**caractérisé en ce que** les moyens de contrôle comprennent des moyens de régulation (21, 22, 23, 24, 25, 27) pour réguler la fréquence du réseau (5) entre des valeurs minimales (ΔFmin) et maximales (ΔFmax) de fréquence, les moyens de régulation comprenant au moins une boucle à verrouillage de phase (22) associée à un correcteur de type Proportionnel Intégral (25, 26) et un comparateur (27) recevant une valeur de référence de puissance (P_{ref}) et la sortie du correcteur (25) pour piloter le convertisseur de fréquence (11).

2. Système selon la revendication 1, dans lequel le ou chaque convertisseur de fréquence est un convertisseur bidirectionnel apte à assurer un transfert de puissance bidirectionnel.

3. Système selon la revendication 2, dans lequel chaque convertisseur (11) comprend un étage d'entrée de filtrage (13), un circuit redresseur actif (13), un circuit de lissage (14) et un circuit onduleur (15).

4. Système selon la revendication 3, dans lequel chaque convertisseur comporte en outre une inductance (L) de filtrage de sortie.

5. Procédé d'alimentation d'une charge au moyen d'un système de distribution d'énergie électrique comprenant un ensemble de générateurs d'énergie électrique (G) entraînés chacun par un moteur thermique (6) et alimentant un réseau de distribution (5), des moyens (7) pour récupérer l'énergie thermique générée lors du fonctionnement des moteurs thermiques et pour vaporiser un fluide de travail, une turbine à vapeur (8) entraînée par le fluide de travail et associée à un générateur raccordé au réseau de distribution pour la transformation de l'énergie thermique récupérée en énergie électrique, le débit du fluide de travail vaporisé étant réglé à une valeur maximale, et des moyens pour contrôler la fréquence du réseau de distribution (5) comprenant au moins un convertisseur de fréquence (11) disposé entre le réseau de distribution et une charge électrique, **caractérisé en ce que** l'on régule la fréquence du réseau entre des valeurs minimales (ΔFmin) et maximales (ΔFmax) de fréquence au moyen d'au moins une boucle à verrouillage de phase (22) associée à un correcteur de type Proportionnel Intégral (25, 26) et un comparateur (27) recevant une valeur de référence de puissance (P_{ref}) et la sortie du correcteur (25) pour piloter le convertisseur de fréquence (11).

6. Procédé selon la revendication 5, dans lequel le débit du fluide de travail vaporisé est réglé en ouvrant au maximum une vanne de commande de débit de fluide de travail vaporisé.

7. Système de propulsion pour navire, comprenant :
- un moteur thermique principal (1) entraînant une ligne d'arbres ;
- un moteur électrique auxiliaire (4) couplé à la ligne d'arbres et alimenté à partir d'un réseau de distribution d'énergie électrique (5), ledit réseau de distribution étant alimenté à partir de moteurs thermiques auxiliaires (6) associés à des générateurs d'énergie électrique (G) ;
- des moyens (7) pour récupérer l'énergie thermique générée lors du fonctionnement du système de propulsion et pour vaporiser un fluide de travail ;
- une turbine à vapeur (8) entraînée par le fluide de travail et associée à un générateur raccordé au réseau de distribution pour la transformation de l'énergie thermique récupérée en énergie électrique, le débit du fluide de travail vaporisé étant réglé à une valeur maximale, et
- des moyens pour contrôler la fréquence du réseau de distribution (5) comprenant au moins un convertisseur de fréquence (11) disposé entre le réseau de distribution et le moteur électrique auxiliaire,
**caractérisé en ce que** les moyens de contrôle comprennent des moyens de régulation (21, 22, 23, 24, 25, 27) pour réguler la fréquence du réseau (5) entre des valeurs minimales (ΔFmin) et maximales (ΔFmax) de fréquence, les moyens de régulation comprenant au moins une boucle à verrouillage de phase (22) associée à un correcteur de type Proportionnel Intégral (25, 26) et un comparateur (27) recevant une valeur de référence de puissance (P_{ref}) et la sortie du correcteur (25) pour piloter le convertisseur de fréquence (11).

8. Système de propulsion selon la revendication 7, comprenant en outre un ensemble de générateurs d'énergie électrique (G) entraînés chacun par un moteur thermique (6) et alimentant le réseau de distribution.

9. Système de propulsion selon l'une des revendications 7 et 8, comprenant en outre au moins un propulseur d'étrave comprenant un moteur électrique (28) apte à être alimenté à partir du réseau de distribution d'énergie électrique (5) par l'intermédiaire du convertisseur de fréquence (11), ledit réseau étant alimenté à partir des moteurs thermiques lorsque les propulseurs d'étrave sont alimentés à partir dudit réseau.

10. Procédé de propulsion d'un navire au moyen d'un système de propulsion comprenant un moteur thermique principal (1) entraînant une ligne d'arbres, un moteur électrique auxiliaire (4) couplé à la ligne d'arbres et alimenté à partir d'un réseau de distribution d'énergie électrique, ledit réseau de distribution étant alimenté à partir de moteurs thermiques auxiliaires (6) associés à des générateurs d'énergie électrique (G), des moyens (7) pour récupérer l'énergie thermique générée lors du fonctionnement du système de propulsion et pour vaporiser un fluide de travail, une turbine à vapeur (8) entraînée par le fluide de travail et associée à un générateur raccordé au réseau de distribution pour la transformation de l'énergie thermique récupérée en énergie électrique, le débit du fluide de travail vaporisé étant réglé à une valeur maximale, et des moyens pour contrôler la fréquence du réseau de distribution (5) comprenant au moins un convertisseur de fréquence (11) disposé entre le réseau de distribution et le moteur électrique auxiliaire, **caractérisé en ce que** l'on régule la fréquence du réseau entre des valeurs minimales (ΔFmin) et maximales (ΔFmax) de fréquence au moyen d'au moins une boucle à verrouillage de phase (22) associée à un correcteur de type Proportionnel Intégral (25, 26) et un comparateur (27) recevant une valeur de référence de puissance (P_{ref}) et la sortie du correcteur (25) pour piloter le convertisseur de fréquence (11).

11. Procédé de propulsion selon la revendication 10, dans lequel le réseau de distribution est alimenté à partir d'un ensemble de générateurs d'énergie électrique (G) entraînés chacun par un moteur thermique (6).

12. Procédé de propulsion selon l'une des revendications 10 et 11, dans lequel on alimente au moins un propulseur d'étrave comprenant un moteur électrique (28) à partir du réseau de distribution d'énergie électrique (5) par l'intermédiaire du convertisseur de fréquence (11), ledit réseau étant alimenté à partir des moteurs thermiques lorsque les propulseurs d'étrave sont alimentés à partir dudit réseau.

## Patentansprüche

1. System zur Verteilung von elektrischer Energie, umfassend eine Anordnung von Generatoren elektrischer Energie (G), die jeweils von einem Verbrennungsmotor (6) angetrieben werden und ein Verteilungsnetz (5) speisen; Mittel (7) zum Rückgewinnen der Wärmeenergie, die beim Betreiben der Verbrennungsmotoren generiert wird, und zum Verdampfen einer Arbeitsflüssigkeit;
eine Dampfturbine (8), die durch die Arbeitsflüssigkeit angetrieben wird, und einem Generator zugewiesen ist, der zur Umwandlung der rückgewonnenen Wärmeenergie in elektrische Energie an das Verteilungsnetz angeschlossen ist, wobei der Volumenstrom der verdampften Arbeitsflüssigkeit auf einen maximalen Wert eingestellt wird, und
Mittel zum Kontrollieren der Frequenz des Verteilungsnetzes (5), mindestens einen Frequenzwandler (11) umfassend, der zwischen dem Verteilungsnetz und einer elektrischen Ladung angeordnet ist,
**dadurch gekennzeichnet, dass** die Mittel zum Kontrollieren Regelungsmittel (21, 22, 23, 24, 25, 27) zum Regeln der Netzfrequenz (5) zwischen dem minimalen (ΔFmin) und dem maximalen (ΔFmax) Frequenzwert umfassen, wobei die Regelungsmittel mindestens eine Schleife mit Phasenverriegelung (22) umfassen, die einem Korrektor vom Typ Proportional Integral (25, 26) zugeordnet ist, und einen Vergleicher (27), der einen Leistungsreferenzwert (P_{ref}) empfängt, und den Ausgang des Korrektors (25) zum Ansteuern des Frequenzwandlers (11).

2. System nach Anspruch 1, wobei der oder jeder Frequenzwandler ein bidirektionaler Wandler ist, der imstande ist, für einen bidirektionalen Leistungstransfer zu sorgen.

3. System nach Anspruch 2, wobei jeder Wandler (11) eine Eingangsfilterstufe (13), eine aktive Gleichrichterschaltung (13), eine Glättungsschaltung (14) und eine Wechselrichterschaltung (15) umfasst.

4. System nach Anspruch 3, wobei jeder Wandler weiter eine Ausgangsfilterinduktivität (L) beinhaltet.

5. Verfahren zur Einspeisung einer Ladung anhand eines System zur Verteilung von elektrischer Energie, umfassend eine Anordnung von Generatoren elektrischer Energie (G), die jeweils von einem Verbrennungsmotor (6) angetrieben werden und ein Verteilungsnetz (5) speisen, Mittel (7) zum Rückgewinnen der Wärmeenergie, die beim Betreiben der Verbrennungsmotoren generiert wird, und zum Verdampfen einer Arbeitsflüssigkeit, eine Dampfturbine (8), die durch die Arbeitsflüssigkeit angetrieben wird, und einem Generator zugewiesen ist, der zur Umwandlung der rückgewonnenen Wärmeenergie in elektrische Energie an das Verteilungsnetz angeschlossen ist, wobei der Volumenstrom der verdampften Arbeitsflüssigkeit auf einen maximalen Wert eingestellt wird, und Mittel zum Kontrollieren der Frequenz des Verteilungsnetzes (5), mindestens einen Frequenzwandler (11) umfassend, der zwischen dem Verteilungsnetz und einer elektrischen Ladung angeordnet ist, **dadurch gekennzeichnet, dass** die Frequenz des Netzes anhand mindestens einer Schleife mit Phasenverriegelung (22), die einem Korrektor vom Typ Proportional Integral (25, 26) zugeordnet ist, und einem Vergleicher (27), der einen Leistungsreferenzwert (P_{ref}) empfängt, und dem Ausgang des Korrektors (25) zum Ansteuern des Frequenzwandlers (11) zwischen dem minimalen (ΔFmin) und dem maximalen (ΔFmax) Frequenzwert geregelt wird.

6. Verfahren nach Anspruch 5, wobei der Volumenstrom der verdampften Arbeitsflüssigkeit eingestellt wird, indem man ein Steuerventil für den Volumenstrom der verdampften Arbeitsflüssigkeit auf ein Maximum öffnet.

7. Antriebssystem für ein Schiff, umfassend:
- einen Hauptverbrennungsmotor (1), der einen Wellenstrang antreibt;
- einen Hilfselektromotor (4), der an den Wellenstrang gekoppelt ist, und aus einem Verteilungsnetz für elektrische Energie (5) gespeist wird, wobei das Verteilungsnetz von Hilfsverbrennungsmotoren (6) gespeist wird, die den Generatoren elektrischer Energie (G) zugewiesen sind;
- Mittel (7) zum Rückgewinnen von Wärmeenergie, die beim Betreiben der Verbrennungsmotoren generiert wird, und zum Verdampfen einer Arbeitsflüssigkeit;
- eine Dampfturbine (8), die durch die Arbeitsflüssigkeit angetrieben wird, und einem Generator zugewiesen ist, der zur Umwandlung der rückgewonnenen Wärmeenergie in elektrische Energie an das Verteilungsnetz angeschlossen ist, wobei der Volumenstrom der verdampften Arbeitsflüssigkeit auf einen maximalen Wert eingestellt wird, und
- Mittel zum Kontrollieren der Frequenz des Verteilungsnetzes (5), mindestens einen Frequenzwandler (11) umfassend, der zwischen dem Verteilungsnetz und dem Hilfselektromotor angeordnet ist,
**dadurch gekennzeichnet, dass** die Mittel zum Kontrollieren Regelungsmittel (21, 22, 23, 24, 25, 27) zum Regeln der Netzfrequenz (5) zwischen dem minimalen (ΔFmin) und dem maximalen (ΔFmax) Frequenzwert umfassen, wobei die Regelungsmittel mindestens eine Schleife mit Phasenverriegelung (22) umfassen, die einem Korrektor vom Typ Proportional Integral (25, 26) zugeordnet ist, und einen Vergleicher (27), der einen Leistungsreferenzwert (P_{ref}) empfängt, und den Ausgang des Korrektors (25) zum Ansteuern des Frequenzwandlers (11).

8. Antriebssystem nach Anspruch 7, weiter eine Anordnung von Generatoren elektrischer Energie (G) umfassend, die jeweils von einem Verbrennungsmotor (6) angetrieben werden und ein Verteilungsnetz speisen.

9. Antriebssystem nach einem der Ansprüche 7 und 8, weiter mindestens ein Bugstrahlruder umfassend, das einen Elektromotor (28) umfasst, der imstande ist, über den Frequenzwandler (11) aus dem Verteilungsnetz elektrischer Energie (5) gespeist zu werden, wobei das Netz von den Verbrennungsmotoren gespeist wird, wenn die Bugstrahlruder aus dem Netz gespeist werden.

10. Verfahren zum Antreiben eines Schiffes anhand eines Antriebssystems, umfassend einen Hauptverbrennungsmotor (1), der einen Wellenstrang antreibt, einen Hilfselektromotor (4), der an den Wellenstrang gekoppelt ist, und aus einem Verteilungsnetz für elektrische Energie gespeist wird, wobei das Verteilungsnetz von Hilfsverbrennungsmotoren (6) gespeist wird, die Generatoren elektrischer Energie (G) zugewiesen sind, Mittel (7) zum Rückgewinnen von Wärmeenergie, die beim Betreiben der der Verbrennungsmotoren generiert wird, und zum Verdampfen einer Arbeitsflüssigkeit, eine Dampfturbine (8), die durch die Arbeitsflüssigkeit angetrieben wird, und einem Generator zugewiesen ist, der zur Umwandlung der zurückgewonnenen Wärmeenergie in elektrische Energie an das Verteilungsnetz angeschlossen ist, wobei der Volumenstrom der verdampften Arbeitsflüssigkeit auf einen maximalen Wert eingestellt wird, und Mittel zum Kontrollieren der Frequenz des Verteilungsnetzes (5), mindestens einen Frequenzwandler (11) umfassend, der zwischen dem Verteilungsnetz und dem Hilfselektromotor angeordnet ist, **dadurch gekennzeichnet, dass** die Frequenz des Netzes zwischen minimalen (ΔFmin) und maximalen (ΔFmax) Frequenzwerten anhand mindestens einer Schleife mit Phasenverriegelung (22) eingestellt wird, die einem Korrektor vom Typ Proportional Integral (25, 26) zugeordnet ist und eines Vergleichers (27), der einen Leistungsreferenzwert (P_{ref}) empfängt, und des Ausgangs des Korrektors (25) zum Ansteuern des Frequenzwandlers (11).

11. Verfahren zum Antreiben nach Anspruch 10, wobei das Verteilungsnetz aus einer Anordnung von Generatoren elektrischer Energie (G) gespeist wird, die jeweils durch einen Verbrennungsmotor (6) angetrieben werden.

12. Verfahren zum Antreiben nach einem der Ansprüche 10 und 11, wobei mindestens ein Bugstrahlruder, das einen Elektromotor (28) umfasst, aus dem Verteilungsnetz elektrischer Energie (5) anhand des Frequenzwandlers (11) gespeist wird, wobei das Netz von den Verbrennungsmotoren gespeist wird, wenn die Bugstrahlruder aus dem Netz gespeist werden.

## Claims

1. An electrical power distribution system, comprising a set of electrical power generators (G) each driven by a heat engine (6) and supplying a distribution network (5); means (7) for recovering the thermal energy generated during the operation of the heat engines and for vaporising a working fluid;
a steam turbine (8) driven by the working fluid and associated with a generator connected to the distribution network for transforming the recovered thermal energy into electrical power, the flow rate of the vaporised working fluid being set to a maximum value, and
means for controlling the frequency of the distribution network (5) comprising at least one frequency converter (11) disposed between the distribution network and an electrical load,
**characterised in that** the control means comprise regulation means (21, 22, 23, 24, 25, 27) for regulating the frequency of the network (5) between minimum (ΔFmin) and maximum (ΔFmax) frequency values, the regulation means comprising at least one phase locked loop (22) associated with a Proportional-Integral type corrector (25, 26) and a comparator (27) receiving a power reference value (P_{ref}) and the output of the corrector (25) to control the frequency converter (11).

2. The system according to claim 1, wherein the or each frequency converter is a bidirectional converter capable of performing a bidirectional power transfer.

3. The system according to claim 2, wherein each converter (11) comprises a filtering input stage (13), an active rectifier circuit (13), a smoothing circuit (14) and an inverter circuit (15).

4. The system according to claim 3, wherein each converter further includes an output filter inductor (L).

5. A method for supplying a load by means of an electrical power distribution system comprising a set of electrical power generators (G) each driven by a heat engine (6) and supplying a distribution network (5), means (7) for recovering the thermal energy generated during the operation of the heat engines and for vaporising a working fluid, a steam turbine (8) driven by the working fluid and associated with a generator connected to the distribution network for transforming the recovered thermal energy into electrical power, the flow rate of the vaporised working fluid being set to a maximum value, and means for controlling the frequency of the distribution network (5) comprising at least one frequency converter (11) disposed between the distribution network and an electrical load, **characterised in that** the frequency of the network is regulated between minimum (ΔFmin) and maximum (ΔFmax) frequency values by means of at least one phase locked loop (22) associated with a Proportional-Integral type corrector (25, 26) and a comparator (27) receiving a power reference value (P_{ref}) and the output of the corrector (25) to control the frequency converter (11).

6. The method according to claim 5, wherein the flow rate of the vaporised working fluid is regulated by fully opening a vaporised working fluid flow control valve.

7. A propulsion system for a ship, comprising:
- a main heat engine (1) driving a line of shafts;
- an auxiliary electric motor (4) coupled to the line of shafts and supplied from an electrical power distribution network (5), said distribution network being supplied from auxiliary heat engines (6) associated with electrical power generators (G);
- means (7) for recovering the thermal energy generated during the operation of the propulsion system and for vaporising a working fluid;
- a steam turbine (8) driven by the working fluid and associated with a generator connected to the distribution network for transforming the recovered thermal energy into electrical power, the flow rate of the vaporised working fluid being set to a maximum value, and
- means for controlling the frequency of the distribution network (5) comprising at least one frequency converter (11) disposed between the distribution network and the auxiliary electric motor,
**characterised in that** the control means comprise regulation means (21, 22, 23, 24, 25, 27) for regulating the frequency of the network (5) between minimum (ΔFmin) and maximum (ΔFmax) frequency values, the regulation means comprising at least one phase locked loop (22) associated with a proportional-integral type corrector (25, 26) and a comparator (27) receiving a power reference value (P_{ref}) and the output of the corrector (25) to control the frequency converter (11).

8. The propulsion system according to claim 7, further comprising a set of electric power generators (G) each driven by a heat engine (6) and supplying the distribution network.

9. The propulsion system according to one of claims 7 and 8, further comprising at least one bow thruster comprising an electric motor (28) capable of being supplied from the electrical power distribution network (5) via the frequency converter (11), said network being supplied from the heat engines when the bow thrusters are supplied from said network.

10. A method for propelling a ship by means of a propulsion system comprising a main heat engine (1) driving a line of shafts, an auxiliary electric motor (4) coupled to the line of shafts and supplied from an electrical power distribution network, said distribution network being supplied from auxiliary heat engines (6) associated with electrical power generators (G), means (7) for recovering the thermal energy generated during the operation of the propulsion system and for vaporising a working fluid, a steam turbine (8) driven by the working fluid and associated with a generator connected to the distribution network for transforming the recovered thermal energy into electrical power, the flow rate of the vaporised working fluid being set to a maximum value, and means for controlling the frequency of the distribution network (5) comprising at least one frequency converter (11) disposed between the distribution network and the auxiliary electric motor, **characterised in that** the frequency of the network is regulated between minimum (ΔFmin) and maximum (ΔFmax) frequency values by means of at least one phase locked loop (22) associated with a Proportional-Integral type corrector (25, 26) and a comparator (27) receiving a power reference value (P_{ref}) and the output of the corrector (25) to control the frequency converter (11).

11. The propulsion method according to claim 10, wherein the distribution network is supplied from a set of electrical power generators (G) each driven by a heat engine (6).

12. The propulsion method according to one of claims 10 and 11, wherein at least one bow thruster comprising an electric motor (28) is supplied from the electrical power distribution network (5) via the frequency converter (11), said network being supplied from heat engines when the bow thrusters are supplied from said network.
